(19) Europäisches Patentamt
European Patent Office
Office européen des brevets

(11) **EP 4 560 732 A1**

(12) **EUROPEAN PATENT APPLICATION**

(43) Date of publication:
**28.05.2025 Bulletin 2025/22**

(21) Application number: **23218091.9**

(22) Date of filing: **19.12.2023**

(51) International Patent Classification (IPC):
**H01M 4/525** (2010.01) **H01M 10/04** (2006.01)
**H01M 10/0525** (2010.01) **H01M 10/0587** (2010.01)

(52) Cooperative Patent Classification (CPC):
**H01M 10/0525; H01M 4/525; H01M 10/0431;
H01M 10/0587**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.11.2023 CN 202311575950**

(71) Applicant: **AESC Japan Ltd.**
**Yokohama-Shi, Kanagawa 220-0012 (JP)**

(72) Inventors:
• **LIANG, Wei**
**Jiangyin City, Wuxi City, 214443 (CN)**

• **CHE, Peipei**
**Jiangyin City, Wuxi City, 214443 (CN)**
• **LIU, Jinhua**
**Jiangyin City, Wuxi City, 214443 (CN)**
• **YANG, Kaihua**
**Jiangyin City, Wuxi City, 214443 (CN)**

(74) Representative: **Becker, Eberhard**
**Becker Kurig & Partner**
**Patentanwälte mbB**
**Bavariastraße 7**
**80336 München (DE)**

Remarks:
Amended claims in accordance with Rule 137(2)
EPC.

(54) **SECONDARY BATTERY AND ELECTRONIC APPARATUS**

(57) The invention provides a secondary battery and an application thereof. The secondary battery at least includes: a housing (10); and a wound cell (11), disposed in the housing (10) and including a negative electrode plate, a positive electrode plate, and a separator. In a state of charge (SOC) of 100%, the wound cell satisfies:

$$0 \leq \frac{\sqrt{L1(1+X1)}}{(L2(1+X2))} \leq 0.0255\%$$

. L1 represents a thickness of the negative electrode plate under an initial SOC of 0%, X1 represents a longitudinal expansion rate of the negative electrode plate, L2 represents a width of the wound cell (11), and X2 represents a lateral expansion rate of the wound cell (11). Through the secondary battery and the application thereof according to the invention, lithium precipitation during the cycle process can be reduced, and the cycle performance of the secondary battery can be facilitated.

FIG. 1

EP 4 560 732 A1

**Description**

**BACKGROUND**

Technical Field

The invention relates to the technical field of secondary batteries, and particularly relates to a secondary battery and an application thereof.

Description of Related Art

With the rapid development of smart grids, electric vehicles, and portable electronic products, etc., secondary batteries, such as lithium-ion batteries, have become one of the most widely used power batteries. Lithium-ion batteries have been widely used in various electric vehicles due to advantages such as high operating voltage, long cycle life, no memory effect, low self-discharge, and environmental friendliness. Depending on how the cells are formed, cells in lithium-ion batteries are categorized into laminated cells, wound cells, etc. Wound cells are more common in power batteries. However, due to the special structure in wound cells, lithium may be prone to precipitate at an interface during the charge-discharge cycle process.

**SUMMARY**

The invention provides a secondary battery and an application thereof capable of ensuring interface stability of a wound cell during the charge-discharge process, reducing lithium precipitation during the cycling process, and facilitating the cycle performance of the secondary battery.

In order to solve the above technical issue, the invention is realized through technical solutions as follows.

An aspect of the invention provides a secondary battery. The secondary battery at least includes: a housing; and a wound cell, disposed in the housing and including a negative electrode plate, a positive electrode plate, and a separator.

In a state of charge (SOC) of 100%, the wound cell satisfies:
$$0 \leq \frac{\sqrt{L1(1+X1)}}{(L2(1+X2))} \leq 0.0255\%$$
. L1 represents a thickness of the negative electrode plate under an initial SOC of 0%, X1 represents a longitudinal expansion rate of the negative electrode plate, L2 represents a width of the wound cell, and X2 represents a lateral expansion rate of the wound cell.

According to an embodiment of the invention, a value range of L1 satisfies: $60\ \mu m \leq L1 \leq 200\ \mu m$, and a value range of L2 satisfies: $80\ mm \leq L2 \leq 400\ mm$.

According to an embodiment of the invention, the number of cycles of the secondary battery is within 1 to 60, and under the SOC of 100%, the wound cell satisfies:
$$0 \leq \frac{\sqrt{L1(1+X1)}}{(L2(1+X2))} \leq 0.0255\%.$$

According to an embodiment of the invention, the negative electrode plate includes a negative electrode active material, the negative electrode active material includes one of graphite or graphite doped with a silicon material, and the silicon material includes at least one of silicon monoxide or silicon.

According to an embodiment of the invention, the positive electrode plate includes a positive electrode active material, the positive electrode active material includes at least one of a nickel-cobalt-manganese ternary material or a modified nickel-cobalt-manganese ternary material.

According to an embodiment of the invention, a general formula of the nickel-cobalt-manganese ternary material is: $LiNi_xCo_yMn_{1-x-y}O_2$, where $0.5 \leq x \leq 0.9$ and $0.01 \leq y \leq 0.2$.

According to an embodiment of the invention, a general formula of the modified nickel-cobalt-manganese ternary material is: $LiNi_xCo_yMn_{1-x-y}M_zO_2$, where $0.5 \leq x \leq 0.95$, $0.01 \leq y \leq 0.2$, $0 < z \leq 0.1$, $1-x-y > 0$, and M is at least selected from one of C, Cr, Zr, Ca, Mg, Cu, Ti, Al, Mo, W or Zn.

According to an embodiment of the invention, the secondary battery further includes an electrolytic solution, the electrolytic solution is filled into the wound cell and between the wound cell and the housing, the electrolytic solution includes a lithium salt, and the lithium salt includes lithium hexafluorophosphate.

According to an embodiment of the invention, the electrolytic solution further comprises an additive, and the additive includes at least one of 1,3-propanesultone, ethylene sulfate, fluoroethylene carbonate, or vinylene carbonate.

The invention further provides an electronic including the secondary battery.

In view of the foregoing, the embodiments of the invention provide the secondary battery and the application thereof. With the secondary battery and the application thereof, issues such as wrinkles of the electrode plate and the deterioration of the interface can be reduced, the interface stability of the wound cell during the charge-discharge process can be secured, the ion transport path is optimized, issues such as lithium precipitation, heat generation, etc., resulting from non-uniform electrode plate current density distribution of a cell with electrode tabs on a single side or on two sides during the charge-discharge process are optimized, the risk of having cracks at the corner regions of the wound cell during the cycle process is significantly reduced, and the processing difficulty in winding and assembling of the cell can be reduced, etc. Accordingly, the performance of the secondary battery is facilitated. The positive electrode active material layer can be suppressed from falling off, and the cycle performance of the secondary battery can be facilitated. The negative electrode active material layer can be suppressed from falling off, which helps to facilitate the stability of the structure of the negative electrode plate and the electrolytic solution wettability, thereby enhancing the electro-chemical performance of the secondary battery. The lithium precipitation during the cycle process can be reduced, and the cycle performance of the secondary battery can be facilitated.

**BRIEF DESCRIPTION OF THE DRAWINGS**

To more clearly describe the technical solution of the embodiments of the invention, the drawings needed to describe the embodiments will be described in the following. It goes without saying that the drawings in the following description are merely some embodiments of the invention, and for those of ordinary skill in the art, other drawings can also be attained based on these drawings without creative efforts.

FIG. 1 is a schematic view illustrating a secondary battery as a soft pack battery according to an embodiment of the invention.
FIG. 2 is a schematic view illustrating an ion battery as a hard shell battery according to another embodiment of the invention.
FIG. 3 is a schematic view illustrating a wound cell according to an embodiment of the invention.
FIG. 4 is a schematic view illustrating a negative electrode plate according to an embodiment of the invention.

Reference Signs List: 10: Housing; 11: Wound cell; 12: First electrode; 13: Second electrode; 14: Explosion proof valve; 101: Negative electrode piece; 102: Negative electrode tab; 103: Coated region; 104: Thinned region.

**DESCRIPTION OF THE EMBODIMENTS**

The following describes the embodiments of the invention through specific examples. Those skilled in the art can easily understand other advantages and effects of the invention from the contents disclosed in this specification. The invention may also be implemented or applied through other different specific embodiments. Various details in the specification may also be modified or changed in various ways based on different viewpoints and applications without departing from the spirit of the invention.

It should be understood that the invention may be embodied in different forms and shall not be construed as limited to the embodiments set forth herein. Rather, the embodiments are provided herein so that the disclosure shall be thorough and complete, and shall set forth the scope of the invention to those skilled in the art.

The technical solution of the invention will be further described in detail below with reference to several embodiments and drawings. The embodiments described herein merely constitute some, instead of all, of the embodiments of the invention. Based on the embodiments of the invention, all other embodiments attained by those of ordinary skill in the art without any creative effort shall fall within the scope of the invention.

The invention provides an electronic apparatus. The electronic apparatus includes at least one secondary battery, and the secondary battery provides electric power. The electronic apparatus may be a vehicle, a cell phone, a portable device, a laptop computer, a ship, a spacecraft, an electronic toy and a power tool, etc. According to an embodiment of the invention, the vehicle is, for example, a new energy vehicle, and the new energy vehicle may be a pure electric vehicle, a hybrid vehicle, or a range-extended vehicle, etc. The spacecraft includes an airplane, a rocket, a space shuttle and a spaceship, etc. The electronic toy includes a static or mobile electronic toy, such as a game console, a toy electric car, a toy electric ship and a toy electric aircraft. The power tool includes an electric metal cutting tool, an electric grinding tools, an electric assembly tool and an electric railway tool, such as an electric drill, an electric grinder, an electric wrench, an electric screwdriver, an electric hammer, an impact drill, a concrete vibrator and an electric planer. The invention specifies the types and steps of the electric apparatus.

In the charge-discharge process of the secondary battery, a negative electrode active material in the secondary battery expands and contracts repeatedly during the cycle process, impacting the material, and causing a wound cell to contract and expand in different directions. If the space preserved in the wound cell is insufficient, the electrode plate may easily run out of space for expansion. As a result, the electrode plate may be wrinkled, the interface may deteriorate, or even more severe the precipitated lithium may self-discharge, causing safety issues such as short-circuiting. As a result, the development of secondary batteries is limited.

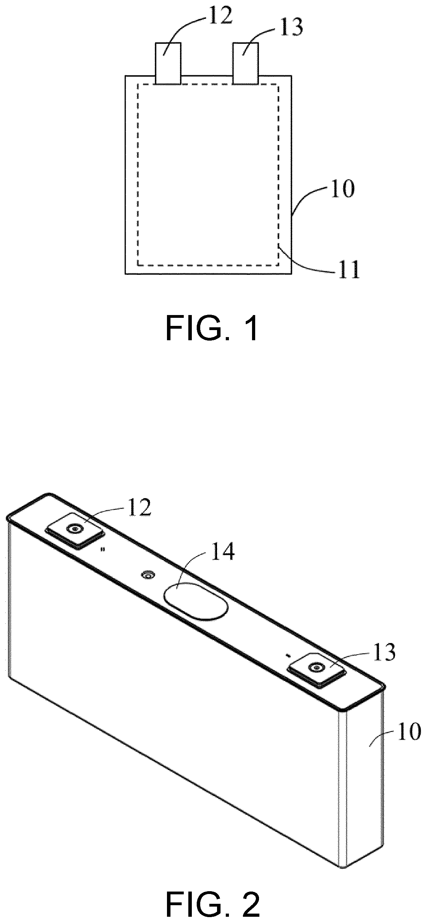

Referring to FIGs. 1 and 2, the invention provides a secondary battery applicable to an electronic apparatus. The secondary battery includes a housing 10 and a wound cell 11. The wound cell 11 is disposed inside the housing 10. The wound cell 11 includes a negative electrode plate, a positive electrode plate, and a separator, etc. The separator is disposed between the negative electrode plate and the positive electrode plate. In addition, an electrolytic solution is filled into the wound cell 11 and between the wound cell 11 and the housing 10. The secondary battery further includes a first electrode 12 and a second electrode 13 disposed separately on the same side of the housing 10 and respectively connected with the electrode tabs of the negative electrode plate and the positive electrode plate inside the wound cell 11 to serve as the positive electrode and the negative electrode of the secondary battery. By doing so, the space utilization rate inside the housing 10 can be improved, and the structure of the cell is simplified, so as to facilitate the connection of multiple cells in the cell module. According to another embodiment of the invention, the first electrode 12 and the second electrode 13 are disposed at two opposite ends of the housing 10, for example. That is, the cell may be formed to have tabs on a single side or on two sides, so as to satisfy different use requirements in different environments. The invention does not limit the type and the shape of the secondary battery. According to an embodiment of the invention, the secondary battery is, for example, a soft pack battery or a hard shell battery, etc. In the invention, the secondary battery may be a lithium ion battery, for example, and may also be a sodium ion battery. In the embodiment, the secondary battery is described by using a lithium ion battery as an example.

Referring to FIG. 1, according to an embodiment of the invention, the secondary battery is a soft pack battery, for example. The housing 10 of the soft pack battery is a soft film such as a polyimide film, an aluminum plastic film, and a polyethylene film, etc. Specifically, after the wound cell 11 is formed, the soft film externally covers the wound cell, the electrolytic solution is injected, and the opening is sealed. In this way, the soft pack battery is formed.

Referring to FIG. 2, in an embodiment of the invention, the secondary battery is, for example, a hard shell battery, such as a square shell battery or a cylindrical battery. The housing 10 of the hard shell battery is, for example, in a circular shape, a square shape, or a rounded rectangular shape, etc. In addition, the housing 10 is, for example, an aluminum housing or a steel housing. An end of the housing 10 is sealed, and the other end has an opening. The housing 10 forms an accommodating cavity to accommodate the wound cell. The wound cell is placed inside the housing 10, the electrolytic solution is injected, the battery is assembled, and the hard shell battery is formed. In the hard shell battery, an explosion proof valve 14 is disposed between the first electrode 12 and the second electrode 13, such as being disposed at a middle position between the first electrode 12 and the second electrode 13 and keeping a predetermined distance from each of the first electrode 12 and the second electrode 13. When the cell operates normally, the explosion proof valve 14 may turn on an air ventilation function to allow air to flow between the inside and the outside of the cell while prohibiting communication of particles. When thermal runaway occurs in the cell, if the pressure difference inside and outside the cell reaches an explosion proof threshold, the explosion proof valve is opened, and both gases and solids are able to be discharged to the outside of the cell from the inside of the cell. Therefore, the safety performance of the cell is improved.

According to an embodiment of the invention, the positive electrode plate includes a positive electrode current collector and a positive electrode active material layer coated on at least one surface or both surfaces of the positive electrode current collector, for example, so as to increase cell capacity performance. The positive electrode current collector may be, for example, a foil material of nickel, titanium, aluminum, nickel, silver, stainless steel, or carbon, etc., after undergoing a surface treatment. Other than a foil material, any one or a combination of multiple forms, such as a film-like material, a net-like material, a porous material, a foam material, or a non-woven fabric material may be adopted as the positive electrode current collector. In addition, the thickness of the positive electrode current collector is, for example, 8 $\mu$m to 15 $\mu$m. In the embodiment, the positive electrode current collector is, for example, aluminum foil.

According to an embodiment of the invention, the positive electrode active material layer may include, for example, a positive electrode active material, a conductive agent, and an adhesive agent, etc. In addition, based on 100% of the total mass of the positive electrode active material layer, the mass ratio among the positive electrode active material, the conductive agent, and the adhesive agent is, for example, 94.5% to 97.8%: 1.2% to 3.5%: 1% to 2%. The positive electrode active material includes at least one positive active material, such as a nickel-cobalt-manganese ternary material or a modified nickel-cobalt-manganese ternary material. In addition, the general formula of the nickel-cobalt-manganese ternary material is: $LiNi_xCo_yMn_{1-x-y}O_2$, where $0.5 \leq x \leq 0.9$ and $0.01 \leq y \leq 0.2$, and the general formula of the modified nickel-cobalt-manganese ternary material is: $LiNi_xCo_yMn_{1-x-y}M_zO_2$, where $0.5 \leq x \leq 0.95$, $0.01 \leq y \leq 0.2$, $0 < z \leq 0.1$, and M is at least selected from one of C, Cr, Zr, Ca, Mg, Cu, Ti, Al, Mo, W or Zn. The modified nickel-cobalt-manganese ternary material may be modified by performing at least one of doping, coating, or structural control, etc. The conductive agent is selected from any one or more of conductive carbon black (super P, SP), acetylene black, carbon nanotubes (CNT), mesophase carbon microspheres or graphene, etc., for example. The adhesive agent is selected from any one or more of polyvinylidene fluoride (PVDF), polyacrylic acid (PAA), polyamide (PA), polyacrylonitrile (PAN), polyacrylate, polyvinylether, polymethyl methacrylate (PMMA), ethylene-propylene-diene terpolymer (EPDM), or polyhexafluoropropylene, etc., for example. According to an embodiment of the invention, the conductive agent is selected from conductive carbon blacks and carbon nanotubes, for example, the adhesive agent is selected from polyvinylidene fluoride, for example, and the mass ratio among the positive electrode active material, carbon nanotubes, conductive carbon black, and poly vinylidene fluoride is: 94.5% to 97.8%: 0.2% to 1.5%: 1% to 2%: 1% to 2%, for example. Using multiple conductive agents together facilitates the formation of a conductive network, suppresses the positive electrode material layer from falling off, and facilitates the cycle performance of the secondary battery.

According to an embodiment of the invention, the negative electrode plate includes, for example, a negative electrode current collector and a negative electrode active material layer coated on at least one surface or both surfaces of the negative electrode current collector, for example, so as to increase the cell capacity performance. The negative electrode current collector is selected from one of a copper foil current collector, a composite copper foil current collector, a carbon current collector, a foam copper current collector, or a stainless steel current collector, etc., and the thickness of the negative electrode current collector is, for example, 8 $\mu$m to 15 $\mu$m. In the embodiment, the negative electrode current collector is, for example, copper foil.

According to an embodiment of the invention, the negative electrode active material layer may include, for example, a negative electrode active material, an adhesive agent, a conductive agent, and a thickener, etc. In addition, based on 100% of the total mass of the negative electrode active material layer, the mass ratio among the negative electrode active material, the conductive agent, the adhesive agent, and the thickener is, for example, 93.4% to 97.8%: 0.6% to 2.6%: 0.8% to 1.5%: 0.8% to 2.5%. The negative electrode active material includes, for example, one of graphite or graphite doped with a silicon material, etc. Graphite is, for example, natural graphite or artificial graphite. The silicon material in the graphite doped with a silicon material includes, but is not limited to, at least one of silicon monoxide or silicon, etc. The adhesive agent is selected from any one or more of polyvinylidene fluoride, polyamide, polypropylene, polyacrylate, polyvinylether, polymethyl methacrylate, polyhexafluoropropylene or polymerized styrene butadiene rubber (SBR), etc., for example. The conductive agent is selected from any one or more of conductive carbon black, acetylene black, carbon nanotubes, mesophase carbon microspheres or graphene, etc., for example. The thickener is selected from any one or more of carboxymethyl cellulose sodium (CMC) or polyacrylic acid, etc., for example. According to an embodiment of the invention, the conductive agent is selected from conductive carbon blacks and carbon nanotubes, for example, the adhesive agent is selected from polymerized styrene butadiene rubber, for example, the thickener is selected from carboxymethyl cellulose sodium and polyacrylic acid, for example. In addition, the mass ratio among the negative electrode active material, carbon nanotubes, conductive carbon blacks, polyvinylidene fluoride, carboxymethyl cellulose sodium and polyacrylic acid is, for example: 94.5% to 97.8%: 0%-1.2%: 0.6%-1.4%: 0.8%-1.5%: 0.8%-1.5%: 0%-1%. Using multiple thickeners and multiple conductive agents together suppresses the negative electrode active material layer from falling off, which helps facilitate the stability of the structure of the negative electrode plate and the electrolytic solution wettability, thereby enhancing the electro-chemical performance of the secondary battery.

According to an embodiment of the invention, the separator is, for example, one of a polyethylene (PE) film, a polypropylene (PP) film, a glass fiber film, or a composite film, etc. In addition, the thickness of the separator is, for example, 9 $\mu$m to 15 $\mu$m. The electrolytic solution is filled among the positive electrode plate, the negative electrode plate, and the separator and between the wound cell and the housing. The electrolytic solution includes a lithium salts and the lithium salt includes $LiPF_6$. The invention does not intend to limit the type of the electrolytic solution, and any commercial $LiPF_6$ electrolytic solution may be chosen. In an embodiment of the invention, the electrolytic solution includes an organic solvent, a lithium salt, and an additive, etc. The organic solvent includes, for example, any one or at least two of ethylene carbonate (EC), dimethyl carbonate (DMC), ethyl methyl carbonate (EMC), propylene carbonate (PC), or diethyl carbonate (DEC), etc. $LiPF_6$ is selected as the lithium salt, for example. The additive includes at least one of film forming additives, such as 1,3-propanesultone (PS), ethylene sulfate (DTD), fluoroethylene carbonate (FEC), or vinylene carbonate (VC), etc. In the embodiment, the organic solvent is a mixed solution in which the volume ratio among EC, EMC, and DEC is 1:1:1. In an argon atmosphere glove box with a water content of <10 ppm, sufficiently dried lithium hexafluorophosphate is dissolved in the mixed solution, and then 1,3-propanesultone and vinylene carbonate are added, and the mixture is mixed evenly to obtain the electrolytic solution. The concentration of $LiPF_6$ is 1 mol/L, the mass content of 1,3-propanesultone in the electrolytic solution is 0.1% to 3%, and the mass content of vinylene carbonate is 0.1% to 3%.

The invention also provides a method for preparing a secondary battery. According to the method, the positive electrode active material, the conductive agent, and the adhesive agent are mixed according to the mass ratio, and then a positive electrode solvent is added and stirred until the system is uniform to obtain a positive electrode slurry. The positive electrode solvent is selected from, for example, N-methylpyrrolidone (NMP). The positive electrode slurry is evenly coated on at least one surface of the positive electrode current collector. Then, after drying, processes such as rolling, cutting, etc., are performed to obtain the positive electrode plate. The negative electrode active material, the conductive agent, the adhesive agent, and the thickener are mixed according to the mass ratio, and then the negative organic solvent is added, and the mixture is mixed evenly, so as to obtain a negative electrode slurry. The negative solvent is selected from deionized water, for example. The negative electrode slurry is coated on at least one surface of the negative electrode current collector. Then, after drying, processes such as rolling, cutting, etc., are performed to obtain the negative electrode plate. The separator, the positive electrode plate, the separator, and the negative electrode plate are placed successively in such order. Then, the components are wound in the same direction and finished to obtain a wound cell. The wound cell is placed in the housing, the electrolytic solution is injected, and the opening is sealed. Accordingly, a secondary battery is obtained.

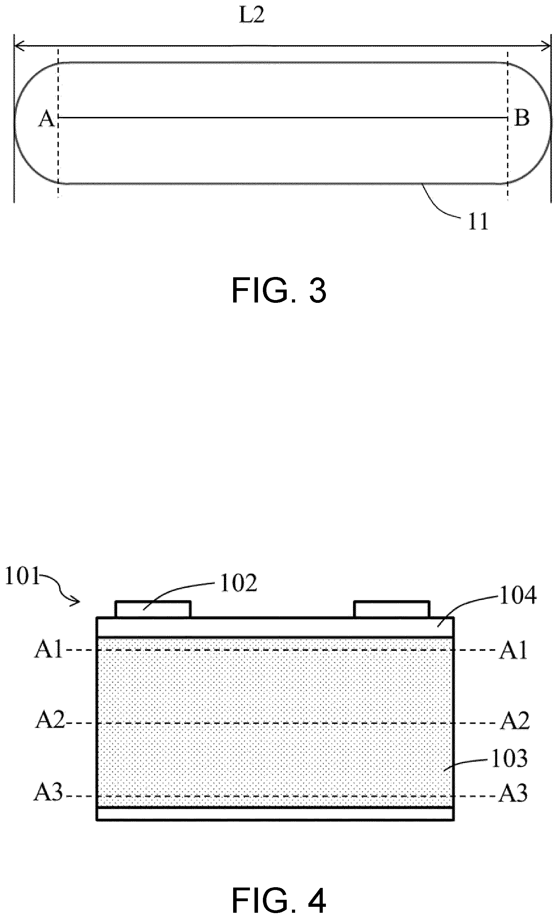

Referring to FIG. 3, in an embodiment of the invention, the wound cell 11 is in a circular shape or rounded rectangular shape. In the embodiment, the wound cell 11 is, for example, in a rounded rectangular shape. In the wound cell 11, two flat regions with large surfaces facing each other are defined as flat regions, the two fat regions are disposed to be opposite to each other, and regions connecting two ends of the flat regions are corner regions. In addition, the width of the wound cell 11 is L2. When the secondary battery is adjusted to a state of charge (SOC) of 100%, the wound cell satisfies:

$$0 \leq \frac{\sqrt{L1(1+X1)}}{(L2(1+X2))} \leq 0.0255\%$$

, where L1 is a thickness of the negative electrode plate in an initial SOC of 0% (i.e., the thickness of the negative electrode plate when the secondary battery is not under any working condition after being assembled), X1 is a longitudinal expansion rate of the negative electrode plate, L2 is the thickness of the wound cell, and X2 is a lateral expansion rate of the wound cell. In addition, the value range of L1 satisfies: $60~\mu m \leq L1 \leq 200~\mu m$, and the value range of L2 satisfies: $80~mm \leq L2 \leq 400~mm$. In the secondary battery, when the number of cycles is, for example, within 1 to 60, the SOC is 100%, and the wound cell satisfies the above formula, the interface stability of the battery cell during the charge-discharge process is ensured, the ion transport path is optimized, issues such as lithium precipitation or heat generation, etc., resulting from non-uniform electrode plate current density distribution during the charge-discharge process of the cell with electrode tabs on a single side or on two sides are optimized, the risk of having cracks at the corner regions of the cell during the cycle process is significantly reduced, and the processing difficulty in winding and assembling of the cell can be reduced, etc.

Referring to FIGs. 3 and 4, according to an embodiment of the invention, at the time of testing the lateral expansion rate X2 of the wound cell, a computed tomography (CT) test is conducted on a cell at the beginning of life (BOL) to demonstrate the length status of the negative electrode plate. That is, the test is conducted at the early stage of the lifetime of the cell. Three positions, i.e., the top, the middle, and the bottom in a coated region 103 of the negative electrode plate are selected. In the embodiment, as an example, an A1-A1 position, an A2-A2 position, and an A3-A3 position are selected in the negative electrode plate in the flat region of the inner most layer of the cell, and a thinned region 104 is avoided. In the wound cell 11, the width of the flat region of the negative electrode plate in the innermost winding of the wound cell, that is, a distance D1 from a point A to a point B in the innermost winding of the negative electrode plate in FIG. 3, is marked with high accuracy. After cycles of the wound cell, a CT test is conducted again in the same manner. That is, the width of the flat region of the negative electrode plate of the innermost winding, i.e., a distance D2 from the point A to the point B after cycles, is marked. By performing calculation based on the formula X2 = (D2-D1)/D1, the data of the lateral expansion rate X2 of the wound cell is obtained. In the embodiment, the width of the wound cell is measured by using a vernier scale, for example.

Referring to FIGs. 3 and 4, in an embodiment of the invention, the negative electrode plate 101 in the wound cell 11 includes multiple negative electrode tabs 102, the coated region 103, and the thinned region 104. The coated region 103 is disposed at a middle position of the negative electrode plate 101, the thinned region 104 is disposed on two sides of the coated region 103, and the negative electrode tabs 102 are disposed on the same side of the thinned region 104 away from the coated region 103. According to an embodiment of the invention, after rolling is performed on the negative electrode plate 101, for example, the thickness of the coated region 103 is defined as the thickness of the negative electrode plate at the initial SOC of 0%. At the time of testing the longitudinal expansion rate X1, similar to the test for the lateral expansion rate, a CT test is conducted on the cell at BOL to demonstrate the status of the cross-section of the negative electrode plate. That is, the test is conducted at the early stage of the lifetime of the cell, and a thickness M1 of the negative electrode plate is read and calculated at the innermost layer of the cell. After cycles of the wound cell, a CT test is conducted in the same manner. That is, a thickness M2 of the negative electrode plate of the innermost winding is also marked. Moreover, by calculating based on the formula X1 = (M1-M2)/M2, the data of the longitudinal expansion rate X1 of the negative electrode plate is obtained. In the embodiment, the thickness of the negative electrode plate is measured by using a micrometer, for example.

Hereinafter, the invention will be explained more specifically by referring to examples. However, it should be noted that such examples shall not be construed as limiting. Appropriate modifications can be made within the scope consistent with the gist of the invention, and such modifications all fall within the scope of the invention.

Example 1

Preparation of the positive electrode plate: $LiNi_{0.5}Co_{0.2}Mn_{0.3}O_2$ as the positive electrode active material, carbon nanotubes and conductive carbon black as the conductive agent, and polyvinylidene fluoride as the adhesive agent were mixed according to a mass ratio: 96%: 1%: 1.5%: 1.5%. After the positive electrode active material, the adhesive agent, and the conductive agent were evenly mixed, N-methylpyrrolidone as the solvent was added and stirred until the mixture became uniform and transparent. Accordingly, the positive electrode slurry was obtained. The positive electrode slurry was evenly coated on an aluminum foil current collector of 13 $\mu$m and baked to dry. Then, rolling and cutting were performed to obtain the positive electrode plate.

Preparation of the negative electrode plate: Artificial graphite as the negative electrode active material, carbon nanotubes and conductive carbon black as the conductive agent, polymerized styrene butadiene rubber as the adhesive agent, and carboxymethyl cellulose sodium and polyacrylic acid as the thickener were mixed according to a mass ratio: 95.2%: 0.4%: 0.8%: 1.6%: 1.0%: 1.0%. Then, deionized water was added, and the mixture was sufficiently stirred to obtain the negative electrode slurry. The negative electrode slurry was evenly coated on a copper foil of 13 $\mu$m and then baking, rolling, and cutting were performed to obtain the negative electrode plate. In addition, the thickness of the negative electrode plate at the initial SOC of 0% is 150 $\mu$m.

Selection of the separator: Polyethylene of 13 $\mu$m was selected as the separator.

Preparation of the electrolytic solution: EC, EMC, and DEC were mixed according to the volume ratio of 1:1:1 to obtain a mixed solution. In the argon atmosphere glove box with a water content of <10 ppm, sufficiently dried lithium hexafluorophosphate was dissolved in the mixed solution. Then, 1,3-propanesultone and vinylene carbonate were added, and the mixture was mixed evenly to obtain the electrolytic solution. The concentration of $LiPF_6$ was 1 mol/L, the mass content of 1,3-propanesultone in the electrolytic solution was 1%, and the mass content of vinylene carbonate was 0.5 %.

Preparation of the battery: The positive electrode plate, the separator, and the negative electrode plate were successively stacked, so that the separator was located between the positive electrode plate and the negative electrode plate and served for separation. The components were wound to obtain a wound cell. In addition, the width of the wound cell was 122 mm. Then, the structure was placed in the housing, transferred to a vacuum oven to be dried. Then, the electrolytic solution was injected, and the housing was sealed. After the processes of standing, hot and cold pressing, forming, clamping, and capacity grading, the secondary battery was obtained. With the secondary battery being cycled, the number of cycle is 1.

Example 2

The width of the wound cell was 150 mm, the number of cycles of the secondary battery was 20. Other operations were the same as those of Example 1.

Example 3

The width of the wound cell was 90 mm, the number of cycles of the secondary battery was 40. Other operations were the same as those of Example 1.

Comparative Example 1

The width of the negative electrode plate was 300 $\mu$m at the initial SOC of 0%. The width of the wound cell was 70 mm, the number of cycles of the secondary battery was 1. Other operations were the same as those of Example 1.

Comparative Example 2

The number of cycles of the secondary battery was 20. Other operations were the same as those of Comparative Example 1.

Comparative Example 3

The number of cycles of the secondary battery was 40. Other operations were the same as those of Comparative Example 1.

In the invention, the data and the capacity retention rates of the secondary batteries after different numbers of cycles in Examples 1 to 3 and Comparative Examples 1 to 3 were tested, and the test results are as shown in Table 1.

According to an embodiment of the invention, the capacity retention rate is calculated as follows. As the discharge capacity of the first cycle, the discharge capacity of the secondary battery is tested when the temperature is 25°C, the secondary battery is charged to 4.2 V with a constant current of 1C and discharged to 2.5 V with a constant current of 1C. By cyclically charging and discharging the battery according to the above conditions, the discharge capacities after different numbers of cycles are respectively obtained. With the following formula, the capacity retention rates after the cycles are obtained: Capacity retention rate (%) = (the discharge capacity after the corresponding number of cycles / the discharge capacity after the first cycle) x 100%, where the capacity retention rate is 100% when the number of cycle is 1.

Table 1 Performance of Secondary Batteries in Examples 1 to 3 and Comparative Examples 1 to 3

| Type | Number of Cycles | Thickness L1 ($\mu$m) of Initial SOC of 0% | Winding Body Width L2 (mm) | Longitudinal Expansion Rate X1 | Lateral Expansion Rate X2 | $\dfrac{\sqrt{L1(1+X1)}}{(L2(1+X2))}$ | Cycle Retention Rate (%) |
|---|---|---|---|---|---|---|---|
| Example 1 | 1 | 150 | 122 | 20% | 0.5% | 0.01% | 100% |
| Example 2 | 20 | 150 | 150 | 22% | 0.6% | 0.008% | 100.01% |
| Example 3 | 40 | 150 | 90 | 23% | 0.7% | 0.015% | 99.99% |
| Comparative Example 1 | 1 | 300 | 70 | 20% | 0.5% | 0.027% | 100% |
| Comparative Example 2 | 20 | 300 | 70 | 22% | 0.6% | 0.027% | 97.28% |
| Comparative Example 3 | 40 | 300 | 70 | 23% | 0.7% | 0.027% | 93.24% |

Referring to Table 1, considering Comparative Examples 1 to 3, when the width of the wound cell and the width of the negative electrode plate exceeded the value ranges, within the numbers of cycles and in the SOC of 100%, the wound cell did not satisfy: $0 \leq \dfrac{\sqrt{L1(1+X1)}}{(L2(1+X2))} \leq$ 0.0255%. At this time, as the number of cycles increased, the cycle capacity retention rate of the secondary battery decreased faster, and the capacity of the secondary battery deteriorated significantly. That is, after the result of calculation based on the formula exceeded 0.0255%, the negative electrode interface was wrinkled easily, the interface deteriorated during the cycle expansion process, and the amount of precipitated lithium increased. As a result, various safety issues occurred, and the performance of the secondary battery was not secured.

Referring to Table 1, considering Examples 1 to 3 and Comparative Examples 1 to 3, when the width of the wound cell and the width of the negative electrode plate were within the value ranges, within the numbers of cycles and in the SOC of 100%, and when the wound cell satisfies: $0 \leq \dfrac{\sqrt{L1(1+X1)}}{(L2(1+X2))} \leq 0.0255\%$ , as the number of cycles increased, the capacity retention rate of the secondary battery was less affected, and the capacity retention rate of the secondary battery was higher. Therefore, by designing the structure of the wound cell, issues such as wrinkles of the electrode plate and the deterioration of the interface can be reduced, the interface stability of the wound cell during the charge-discharge process can be secured, the ion transport path is optimized, issues such as lithium precipitation, heat generation, etc., resulting from non-uniform electrode plate current density distribution during the charge-discharge process of the cell with electrode tabs on a single side or on two sides are optimized, the risk of having cracks at the corner regions of the wound cell during the cycle process is significantly reduced, and the processing difficulty in winding and assembling of the cell can be reduced, etc. Accordingly, the performance of the secondary battery is facilitated.

In view of the foregoing, the embodiments of the invention provide a secondary battery and the application thereof. By designing the wound cell, issues such as wrinkles of the electrode plate and the deterioration of the interface can be reduced, the interface stability of the wound cell during the charge-discharge process can be secured, the ion transport path is optimized, issues such as lithium precipitation, heat generation, etc., resulting from non-uniform electrode plate current density distribution during the charge-discharge process of the cell with electrode tabs on a single side or on two sides are optimized, the risk of having cracks at the corner regions of the wound cell during the cycle process is significantly reduced, and the processing difficulty in winding and assembling of the cell can be reduced, etc. Accordingly, the performance of the secondary battery is facilitated. By optimizing the components of the positive electrode active material layer, the positive electrode active material layer can be suppressed from falling off, and the cycle performance of the secondary battery can be facilitated. By optimizing the components of the negative electrode active material layer, the negative electrode active material layer can be suppressed from falling off, which helps to facilitate the stability of the structure of the negative electrode plate and the electrolytic solution wettability, thereby enhancing the electro-chemical performance of the secondary battery. The lithium precipitation during the cycle process can be reduced, and the cycle performance of the secondary battery can be facilitated.

**Claims**

1. A secondary battery, at least comprising:

    a housing (10); and
    a wound cell (11), disposed in the housing (10) and comprising a negative electrode plate, a positive electrode plate, and a separator,

    wherein, in a state of charge (SOC) of 100%, the wound cell (11) satisfies: $0 \leq \frac{\sqrt{L1(1+X1)}}{\left(L2(1+X2)\right)} \leq$ 0.0255%, wherein L1 represents a thickness of the negative electrode plate under an initial SOC of 0%, X1 represents a longitudinal expansion rate of the negative electrode plate, L2 represents a width of the wound cell, and X2 represents a lateral expansion rate of the wound cell.

2. The secondary battery as claimed in claim 1, wherein a value range of L1 satisfies: $60\mu m \leq L1 \leq 200\mu m$, and a value range of L2 satisfies: $80 \ mm \leq L2 \leq 400 \ mm$.

3. The secondary battery as claimed in claim 1, wherein a number of cycles of the secondary battery is within 1 to 60, and under the SOC of 100%, the wound cell satisfies: $0 \leq \frac{\sqrt{L1(1+X1)}}{\left(L2(1+X2)\right)} \leq$ 0.0255%.

4. The secondary battery as claimed in claim 1, wherein the negative electrode plate comprises a negative electrode active material, the negative electrode active material comprises one of graphite or graphite doped with a silicon material, and the silicon material comprises at least one of silicon monoxide or silicon.

5. The secondary battery as claimed in claim 1, wherein the positive electrode plate comprises a positive electrode active material, the positive electrode active material comprises at least one of a nickel-cobalt-manganese ternary material or a modified nickel-cobalt-manganese ternary material.

6. The secondary battery as claimed in claim 5, wherein a general formula of the nickel-cobalt-manganese ternary material is: $LiNi_xCo_yMn_{1-x-y}O_2$, wherein $0.5 \leq x \leq 0.9$ and $0.01 \leq y \leq 0.2$.

7. The secondary battery as claimed in claim 5, wherein a general formula of the modified nickel-cobalt-manganese ternary material is: $LiNi_xCo_yMn_{1-x-y}M_zO_2$, wherein $0.5 \leq x \leq 0.95$, $0.01 \leq y \leq 0.2, 0 < z \leq 0.1$, $1-x-y > 0$, and M is at least selected from one of C, Cr, Zr, Ca, Mg, Cu, Ti, Al, Mo, W or Zn.

8. The secondary battery as claimed in claim 1, wherein the secondary battery further comprises an electrolytic solution, the electrolytic solution is filled into the wound cell (11) and between the wound cell (11) and the housing (10), the electrolytic solution comprises a lithium salt, and the lithium salt comprises lithium hexafluorophosphate.

9. The secondary battery as claimed in claim 8, wherein the electrolytic solution further comprises an additive, and the additive comprises at least one of 1,3-propanesultone, ethylene sulfate, fluoroethylene carbonate, or vinylene carbonate.

10. An electronic apparatus, comprising the secondary battery as claimed in any one of claims 1 to 9.

**Amended claims in accordance with Rule 137(2) EPC.**

1. A secondary battery, at least comprising:

    a housing (10);
    a wound cell (11), disposed in the housing (10) and comprising a negative electrode plate, a positive electrode plate, and a separator;
    wherein the negative electrode plate comprises a negative electrode active material, the negative electrode active material comprises one of graphite or graphite doped with a silicon material, and the silicon material comprises at least one of silicon monoxide or silicon, and the positive electrode plate comprises a positive electrode active material, the positive electrode active material comprises at least one of a nickel-cobalt-manganese ternary material or a modified nickel-cobalt-manganese ternary material; and
an electrolytic solution, the electrolytic solution is filled into the wound cell (11) and between the wound cell (11) and the housing (10), the electrolytic solution comprises a lithium salt, and the lithium salt comprises lithium hexafluorophosphate,

wherein, in a state of charge (SOC) of 100%, the wound cell (11) satisfies: $0 \leq \frac{\sqrt{L1(1+X1)}}{(L2(1+X2))} \leq$ 0.0255%,
wherein L1 represents a thickness measured in $\mu$m of the negative electrode plate under an initial SOC of 0%, X1 represents a longitudinal expansion rate of the negative electrode plate, L2 represents a width measured in $\mu$m of the wound cell, and X2 represents a lateral expansion rate of the wound cell,
wherein the thickness L1 of the negative electrode plate is measured by using a micrometer, the width L2 of the wound cell is measured by using a vernier scale, and a value range of L1 satisfies: $60 \mu m \leq L1 \leq 200 \mu m$, and a value range of L2 satisfies: $80 \, mm \leq L2 \leq 400 \, mm$,
X1 is calculated based on the formula X1 = (M1-M2)/M2 as described in the description, and
X2 is calculated based on the formula X2 = (D2-D1)/D1 as described in the description.

2. The secondary battery as claimed in claim 1, wherein a number of cycles of the secondary battery is within 1 to 60, and under the SOC of 100%, the wound cell satisfies: $0 \leq \frac{\sqrt{L1(1+X1)}}{(L2(1+X2))} \leq$ 0.0255%.

3. The secondary battery as claimed in claim 1, wherein a general formula of the nickel-cobalt-manganese ternary material is: $LiNi_xCo_yMn_{1-x-y}O_2$, wherein $0.5 \leq x \leq 0.9$ and $0.01 \leq y \leq 0.2$.

4. The secondary battery as claimed in claim 1, wherein a general formula of the modified nickel-cobalt-manganese ternary material is: $LiNi_xCo_yMn_{1-x-y}M_zO_2$, wherein $0.5 \leq x \leq 0.95$, $0.01 \leq y \leq 0.2$, $0 < z \leq 0.1$, $1-x-y > 0$, and M is at least selected from one of C, Cr, Zr, Ca, Mg, Cu, Ti, Al, Mo, W or Zn.

5. The secondary battery as claimed in claim 1, wherein the electrolytic solution further comprises an additive, and the additive comprises at least one of 1,3-propanesultone, ethylene sulfate, fluoroethylene carbonate, or vinylene carbonate.

6. An electronic apparatus, comprising the secondary battery as claimed in any one of claims 1 to 5.

FIG. 1

FIG. 2

L2

A                                    B

11

# FIG. 3

101    102                                    104

A1 --- --------------------------------- --- A1

A2 --- --------------------------------- --- A2

103

A3 --- --------------------------------- --- A3

# FIG. 4

# EUROPEAN SEARCH REPORT

**Application Number**

EP 23 21 8091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/070600 A1 (CONTEMPORARY AMPEREX TECHNOLOGY CO LTD [CN]) 4 May 2023 (2023-05-04) * paragraph [0084] - paragraph [0085] * * paragraph [0104] - paragraph [0110] * ----- | 1-10 | INV. H01M4/525 H01M10/04 H01M10/0525 H01M10/0587 |
| X | CN 117 080 557 A (SHENZHEN CAPCHEM TECHNOLOGY CO LTD) 17 November 2023 (2023-11-17) * paragraphs [0021], [0031], [0073] - [0077], [0101] - [0128] * ----- | 1-10 | |

**TECHNICAL FIELDS SEARCHED (IPC)**

H01M

The present search report has been drawn up for all claims

| Place of search | Date of completion of the search | Examiner |
|---|---|---|
| Munich | 12 June 2024 | Möller, Claudia |

EPO FORM 1503 03.82 (P04C01)

**ANNEX TO THE EUROPEAN SEARCH REPORT
ON EUROPEAN PATENT APPLICATION NO.**

EP 23 21 8091

This annex lists the patent family members relating to the patent documents cited in  the above-mentioned European search report.
The members are as contained in the European Patent Office EDP file on
The European Patent Office is in no way liable for these particulars which are merely given for the purpose of information.

12-06-2024

| Patent document cited in search report | Publication date | Patent family member(s) | | Publication date |
|---|---|---|---|---|
| WO 2023070600 A1 | 04-05-2023 | CN | 116868398 A | 10-10-2023 |
| | | EP | 4287331 A1 | 06-12-2023 |
| | | US | 2023378546 A1 | 23-11-2023 |
| | | WO | 2023070600 A1 | 04-05-2023 |
| CN 117080557 A | 17-11-2023 | NONE | | |